# EUROPÄISCHE PATENTSCHRIFT

(11) **EP 2 010 090 B1**
(45) Veröffentlichungstag und Bekanntmachung des Hinweises auf die Patenterteilung: **11.09.2019**
(21) Anmeldenummer: 07727242.5
(22) Anmeldetag: 22.03.2007
(51) Int. Cl.: A61C 1/08, A61C 8/00, A61C 13/00

(54) **VERFAHREN ZUR HERSTELLUNG VON ZAHNERSATZTEILEN**
METHOD FOR PRODUCING TOOTH PROSTHESIS PARTS
PROCÉDÉ DE PRODUCTION DE PROTHÈSES DENTAIRES

(30) Priorität: 24.03.2006 DE 102006013534
(43) Veröffentlichungstag der Anmeldung: 07.01.2009
(73) Patentinhaber: Sicat GmbH & CO. KG, 53177 Bonn (DE)
(72) Erfinder: KUSCH, Jochen, 53343 Wachtberg (DE); HEY, Joachim, 53332 Bornheim (DE); RITTER, Lutz, 53332 Bornheim (DE)
(74) Vertreter: Braun-Dullaeus, Karl-Ulrich
(86) Internationale Anmeldenummer: PCT/EP2007/052768
(87) Internationale Veröffentlichungsnummer: WO 2007/110376

(56) Entgegenhaltungen:
- EP-A- 1 547 544
- WO-A-2006/031096
- DE-A1- 19 952 962

## Beschreibung

### Technisches Gebiet

Die Erfindung betrifft ein Verfahren zur Herstellung von Zahnersatzteilen, umfassend ein Implantat zum Einsetzen in einen Kiefer und eine Prothese zur Befestigung an dem Implantat über eine Verbindungsfläche, wobei ein Implantat passend zur Prothese positioniert wird, so dass die Prothese entlang der Verbindungsfläche mit dem Implantat verbunden werden kann.

### Stand der Technik

Aus der DE 199 52 962 A1 ist die Herstellung von Bohrschablonen bekannt, wobei eine Röntgenaufnahme, z.B. ein Röntgen-3D-Scan mit einer dreidimensionalen optischen Vermessung korreliert wird und die gewonnenen Daten zur Planung des Implantattyps und zum Erzeugen einer Bohrschablone, die die Negative der Oberflächen der Nachbarzähne und eine an vorbestimmter Stelle liegende Öffnung enthält, verwendet werden.

Zur Zeit sind für eine Versorgung von einzelnen oder von mehreren Zähnen mit einem Zahnersatz mehrere Arztbesuche notwendig. Im ersten Schritt wird ein Implantat bezüglich seines Typs, Orts und Winkels geplant und möglichst präzise in den Kiefer nach der Bohrung eines Implantatführungslochs eingebracht. Im zweiten Schritt wird die genaue Lage und Ausrichtung des Implantats unter Verwendung von zeitaufwendigen und komplizierten Prozeduren gemessen. Beispielsweise wird ein Vermessungsstück mit Markierungen am Implantat angebracht und aufgenommen. Aus der Aufnahme können die Abstände der Markierungen zueinander bestimmt werden und daraus die Lage und Ausrichtung des Implantat berechnet werden. Im dritten Schritt wird eine Prothese unter Berücksichtigung der Lage und Ausrichtung des Implantats geplant und gefertigt.

Die Prothese kann mittelbar über ein Verbindungsteil mit dem Implantat verbunden werden. Solche Verbindungsteile müssen oft speziell geplant und gefertigt werden, so dass das Verbindungsteilteil einen Winkel aufweist, der dem Winkel zwischen der gemessenen Ausrichtung des Implantats und einer geplanten Verbindungsachse der Prothese entspricht. Der Nachteil ist, dass bei der Vermessung der Lage und Ausrichtung des Implantats Messfehler auftreten können und zu Passungenauigkeiten der Prothese führen.

Aus der WO2006/031096 und der EP1547544 sind Verfahren zur Herstellung eines Zahnersatzes umfassend eine Prothese und ein Implantat bekannt.

Das aufgezeigte Problem und die Lösungen aus dem Stand der Technik führen zu einer Aufgabe, den Zeitaufwand für die Zahnersatzversorgung zu verringern und die Passgenauigkeit der Prothese zu erhöhen.

### Darstellung der Erfindung

Gemäß der vorliegenden Erfindung wird die oben genannte Aufgabe durch ein Verfahren gemäß Anspruch 1 gelöst. Bei einem erfindungsgemäßen Verfahren zur Herstellung von Zahnersatzteilen, umfassend ein Implantat zum Einsetzen in einen Kiefer und eine Prothese zur Befestigung an dem Implantat über eine Verbindungsfläche ein erster Messdatensatz einer 3D-Röntgenaufnahme wird im Bereich der einzusetzenden Prothese bereitgestellt und auf einer Anzeigeeinheit als 3D-Röntgenmodell dargestellt. Zusätzlich wird ein zweiter Messdatensatz einer dreidimensionalen optischen Vermessung der sichtbaren Oberfläche des Kiefers und von zumindest Teilen der Nachbarzähne im Bereich der einzusetzenden Prothese bereitgestellt. Der Messdatensatz der 3D-Röntgenaufnahme ist mit dem Messdatensatz der dreidimensionale optische Vermessung bezüglich der Geometrie in Korrelation gesetzt. Ein Datensatz zumindest der Oberfläche der Prothese ist als ein 3D-Prothesenmodell bereitgestellt. Das 3D-Prothesenmodell im korrelierten 3D-Röntgenmodell auf der Anzeigeeinheit wird lagerichtig angezeigt, wobei ein Datensatz des Implantats in dem korrelierten 3D-Röntgenmodell auf der Anzeigeeinheit als ein 3D-Implantatmodell angezeigt wird. Über Eingabemittel, vorzugsweise aber automatisch, wird das 3D-Implantatmodell unter Berücksichtigung des 3D-Prothesenmodells und des 3D-Röntgenmodells in dem korrelierten 3D-Röntgenmodell zumindest grob positioniert, gegebenenfalls bezüglich der Art ausgewählt und in den Abmessungen angepasst.

Die Planung des Implantats und der Prothese wird also im ersten Schritt gemeinsam durchgeführt, wobei Informationen aus der Prothesenplanung für die Implantatplanung verwendet werden, ohne dass es einer zusätzlichen Vermessung des Implantats, wie es aus dem Stand der Technik bekannt ist, bedarf. Im zweiten Schritt wird das ausgewählte Implantat entsprechend der geplanten Lage und Orientierung in den Kiefer eingesetzt und die geplante Prothese am Implantat mittelbar oder unmittelbar befestigt.

Das erfinderische Verfahren setzt also erst nach der Protheseplanung ein und dient der Implantatplanung. Aus dem 3D-Prothesenmodell werden mehrere Informationen für die Implantatplanung verwendet, nämlich der Ort, die Ausrichtung, die Form, die Grenzfläche zu der Gingivaoberfläche, die Art und die Kontaktflächen zu den Nachbarzähnen der einzusetzenden Prothese. Bei der Implantatplanung wird zusätzlich das 3D-Röntgenmodell berücksichtigt.

Bei der automatischen Auswahl und Positionierung muss der Behandler anschließend das 3D-Implantatmodell kontrollieren und gegebenenfalls korrigieren.

Bei der Verbindungsfläche handelt es sich um eine Kontaktfläche an der Prothese. Dabei kann die Prothese unmittelbar mit dem Implantat oder mittelbar beispielsweise über ein separates Verbindungsteil oder einen Fortsatz des Implantats verbunden sein.

Die dreidimensionale optische Vermessung der sichtbaren Oberfläche des Kiefers im Bereich der einzusetzenden Prothese umfasst die Oberflächen zumindest von Teilen der Nachbarzähne und die Gingivaoberfläche.

In der 3D-Röntgenaufnahme werden unterhalb der sichtbaren Oberfläche im Kiefer liegende anatomische Strukturen, wie Kieferknochen, Wurzelkanäle und Nerven dargestellt.

Ein Vorteil ist der verringerte Zeitaufwand einer Zahnersatzversorgung. Bei dem erfinderischen Verfahren lässt sich innerhalb eines Zahnarztbesuchs unter der Verwendung einer dreidimensionalen Röntgenaufnahmevorrichtung, einer dreidimensionalen optischen Vermessungsvorrichtung, eines Prothesefertigungssystems und eines Planungssystems das Implantat auswählen, die Prothese planen und fertigen, das Implantat in den Kiefer einsetzen und die Prothese anbringen.

Bei sofortbelastbaren Implantaten kann die endgültige Prothese direkt nach dem Einsetzen des Implantats angebracht werden. Ansonsten wird zuerst eine provisorische Prothese angebracht und nach der Einheilzeit des in den Kieferknochen eingesetzten Implantats die endgültige Prothese angebracht. Das Implantat kann sich während der Einheilzeit geringfügig verschieben. In diesem Fall ist eine erneute dreidimensionale optische Vermessung und Anpassung der endgültigen Prothese notwendig.

Weiterer Vorteil ist, dass die Fertigung der Prothese nach dem erfindungsgemäßen Verfahren passgenauer als eine Fertigung der Prothese erst nach Vermessung der Lage und Orientierung des bereits eingesetzten Implantats ist. Das Implantat ist genauer auf die Prothese abgestimmt, weil sie gemeinsam geplant werden und keine zusätzlichen Messfehler wie bei der Vermessung des Implantats die Passgenauigkeit beeinträchtigen können.

Vorteilhafterweise kann das 3D-Implantatmodell in seiner Lage und/oder seiner Orientierung und/oder seiner Art und/oder seiner Länge und/oder seinem Durchmesser unter Berücksichtigung des 3D-Prothesenmodells automatisch bestimmt sein, nämlich unter Berücksichtigung von dessen Lage und/oder dessen Orientierung und/oder dessen Abmessungen und/oder dessen Grenzfläche zu einer aus der dreidimensionalen optischen Vermessung bekannten Gingivaoberfläche und/oder dessen Kontaktflächen mit den Nachbarzähnen.

Dadurch wird die Betrachtung der korrelierten Darstellung und die Auswahl des 3D-Implantatmodells durch den Behandler automatisiert und somit die Dauer der Zahnersatzversorgung verringert.

Vorteilhafterweise kann die Lage und Orientierung des 3D-Implantatmodells automatisch unter Berücksichtigung der anatomischen Strukturen im Kiefer aus dem 3D-Röntgenmodell gewählt werden.

Da das 3D-Prothesenmodell vorgegeben ist, ist die Lage und Art der einzusetzenden Prothese beispielsweise für Schneide- oder Backenzähne bekannt. Da sich die anatomischen Strukturen bei verschiedenen Menschen nur geringfügig unterscheiden, kann ein 3D-Prothesenmodell automatisch ausschließlich anhand der Lage der einzusetzenden Prothese gewählt werden.

Bei der automatischen Auswahl des 3D-Implantatmodells könnten die anatomischen Strukturen im Kiefer berücksichtigt werden, wobei mehrere Bedingungen erfüllt sein müssen. Erstens muss das Implantat vom Kieferknochen umgeben sein und einen Mindestabstand zum Kieferknochenrand aufweisen, um die für die notwendige mechanische Stabilität des Zahnersatzteils zu gewährleisten. Zweitens müssen beim Einsetzen des Implantat die anatomischen Strukturen wie Nerven und die Zahnwurzeln von Nachbarzähnen aber auch eventuell benachbarte Implantate berücksichtigt werden. Der Abstand des 3D-Implantatmodells zu kritischen Strukturen wie dem Kieferknochenrand, den Nerven, den Zahnwurzeln von Nachbarzähnen und zu benachbarten Implantaten sollte mindestens 2 mm betragen, kann aber auch frei vorgegeben werden.

Vorteilhafterweise können der Durchmesser und die Länge des 3D-Implantatmodells unter der Berücksichtigung der zu erwartenden Belastung durch Kontaktkräfte an den Kontaktflächen der Prothese automatisch ausgewählt werden.

Kontaktflächen treten zu den Nachbarzähnen und den gegenüberliegenden Zähne auf. Im Gegensatz zu den Implantaten werden natürliche Zahnwurzeln durch einen Zahnhalteapparat im Kieferknochen gehalten, der eine Elastizität aufweist und geringfügige Bewegungen der Zähne gegenüber dem Kieferknochen zulässt. Es kommt also insbesondere bei der Kaubewegung zu seitlichen Bewegungen der natürlichen Nachbarzähne und somit zur Belastung durch Kontaktkräfte an den Kontaktflächen zu den Nachbarzähnen. Darüber hinaus kommt es bei der Kaubewegung zur Belastung durch Kontaktkräfte an den Kontaktflächen der gegenüberliegeinenden Zähne.

Bei der automatischen Auswahl können die zu erwartende Belastungen an den Kontaktflächen der Prothese zu den Nachbarzähnen und zu Gegenzähnen berücksichtigt werden. Je nach Ausrichtung des Implantats können diese Belastungen unterschiedlich sein. Der Durchmesser und die Länge des Implantats müssen so gewählt sein, dass das Implantat der zu erwartenden mechanischen Belastung standhält und dabei den Kieferknochen möglichst wenig beeinträchtigt. Das Implantat wird aus einer Mehrzahl von Implantaten ausgewählt, deren Durchmesser beispielsweise zwischen 3 und 6 mm und deren Länge zwischen 8 und 16 mm variieren kann. Diese Abmessungen kommen den Wurzelabmessungen natürlicher Zähne sehr nahe. Backenzähne weisen in der Regel mehrere kürzere und dickere Zahnwurzeln auf, wobei Schneidezähne nur eine eher dünnere und längere Zahnwurzel haben. Die Okklusalfläche der Schneidezähne verläuft nicht wie bei Backenzähnen senkrecht zur Ausrichtung der Zahnwurzeln. Somit wirkt ein größeres Drehmoment auf die Implantate bei Schneidezähnen als bei Backenzähnen, denn die Kontaktkräfte werden senkrecht zur Okklusalfläche übertragen. Folglich sind bei Prothesen für Schneidezähne längere Implantate erforderlich, um die Kontaktkräfte im Kieferknochen aufzunehmen.

Vorteilhafterweise kann das 3D-Implantatmodell eine Längsachse, die Verbindungsfläche eine Verbindungsachse, die im wesentlichen der Einschubachse der Prothese entspricht und das 3D-Prothesenmodell eine Prothesenachse, die bei Backenzähnen senkrecht zur Okklusalfläche der Prothese und durch den Schwerpunkt der Prothese verläuft, aufweisen. Bei Schneidezähnen verläuft die Prothesenachse nicht senkrecht zur Okklusalfläche, sondern entlang des zahnhaltenden Kieferkamms und durch den Schwerpunkt der Prothese. Das 3D-Implantatmodell ist dabei in seiner Lage und seiner Orientierung so veränderbar, dass der Winkel zwischen der Prothesenachse und der Verbindungsachse höchstens 30° beträgt. Dieser Winkel sollte bei Backenzähnen möglichst klein gewählt werden, da dadurch das Einbringen der Prothese erleichtert wird. Die Verbindungsachse ist so ausgerichtet, dass das Einbringen der Prothese entlang der Einschubachse durch die Nachbarzähne höchstens unwesentlich behindert wird.

Dadurch können beispielsweise gerade Verbindungen, wie beispielsweise Verbindungsteile mit übereinstimmender Implantat- und Verbindungsachse schräg zur Prothesenachse verwendet werden. Die Prothesenachse darf dabei höchstens um einen Winkel von 30° von der Verbindungsachse abweichen. Bei der Planung muss berücksichtigt werden, dass das Verbindungsteil innerhalb der Prothese positioniert wird und einen Abstand von mindestens 2 mm zur Oberfläche der Prothese aufweist, um die nötige mechanische Stabilität der Prothese zu gewährleisten. Solche Konstruktionen von Verbindungsteilen schräg zur Prothesenachse können notwendig sein, wenn dadurch die auftretenden Kräfte besser an das Implantat weitergeleitet werden können. Dabei wird die Verbindungsachse so ausgewählt, dass das Einbringen der Prothese von den Nachbarzähnen nicht behindert wird. Dies könnte der Fall sein, wenn die Verbindungsachse mit der Prothesenachse in einer Ebene längs zum Kiefer liegen.

Erfindungsgemäß weist das 3D-Implantatmodell eine Längsachse und die Verbindungsfläche eine Verbindungsachse, die die Einschubrichtung der Prothese darstellt, auf, wobei der Winkel der Längsachse zu der Verbindungsachse aus einer Mehrzahl von vorbestimmten Winkeln zwischen 140° und 180° automatisch ausgewählt ist.

Dadurch kann die Längsachse relativ zur Verbindungsachse so gewählt werden, dass ein vorgefertigtes Verbindungsteil mit bestimmtem Winkel zwischen 140° und 180°verwendet werden kann. Dadurch entfällt die Fertigung eines speziell zu der einzusetzenden Prothese passenden Verbindungsteils, das einen erst aus der Vermessung der Lage und Orientierung des Implantats bestimmten spezifischen Winkel aufweist. Die Zeitdauer der Zahnersatzversorgung wird also verkürzt.

Vorteilhafterweise kann ein Datensatz der Verbindungsfläche als ein 3D-Verbindungsmodell im korrelierten 3D-Röntgenmodell lagerichtig angezeigt werden. Das 3D-Prothesenmodell wird in seiner Form automatisch an das 3D-Verbindungsmodells angepasst.

Bei Verwendung eines Verbindungsteils ist die Verbindungsfläche des Verbindungsteils, die als ein 3D-Verbindungsmodell dargestellt ist, innerhalb des 3D-Prothesenmodells zu positionieren. Das 3D-Prothesenmodell wird dahingehend automatisch angepasst, dass an der Unterseite des 3D-Prothenmodells eine dem 3D-Verbindungsmodell entsprechende Vertiefung eingeplant wird, um eine passgenaue Verbindung bereitzustellen.

Vorteilhafterweise können der Messdatensatz einer 3D-Röntgenaufnahme als das 3D-Röntgenmodell und der Messdatensatz der dreidimensionalen optischen Vermessung als ein 3D-Restaurationsmodell auf der Anzeigeeinheit bezüglich der Geometrie korreliert dargestellt werden. Dabei ist ein Eingabemittel, vorzugsweise ein Schieberegler, vorhanden, um ein Überblendungsverhältnis der beiden Modelle auszuwählen.

Dem Behandler können so die Informationen aus den Messdatensätzen der beiden Aufnahmen im Bereich der einzusetzenden Prothese durch die 3D-Darstellung auf eine einfache Weise zugänglich gemacht werden. Die korrelierte Darstellung ermöglicht es dem Behandler unsichtbare Strukturen aus der 3D-Röntgenaufnahme in tatsächlicher geometrischer Beziehung zu der sichtbaren Oberfläche aus der dreidimensionalen optischen Vermessung zu betrachten und unter Berücksichtigung dieser Strukturen die Lage und die Ausrichtung des 3D-Implantatmodells relativ zum bereits bereitgestelltem 3D-Prothesenmodell auszuwählen.

Das Überblendungsverhältnis der beiden Modelle wird durch ein Eingabemittel, vorzugsweise einen Schieberegler, ausgewählt.

Das Überblendungsverhältnis legt fest, zu welchen Anteilen die beiden Modelle eingeblendet werden. Über das Eingabemittel kann das Überblendungsverhältnis auch so eingestellt werden, dass entweder nur das 3D-Röntgenmodell oder nur das 3d-Restaurationsmodell angezeigt wird.

Das 3D-Prothesenmodell kann entweder als Schnittbild oder als Vollkörper angezeigt werden.

Vorteilhafterweise kann unter Berücksichtigung der ausgewählten Lage und Orientierung des 3D-Implantatmodells und aufgrund der Okklusalfläche der Nachbarzähne aus dem Messdatensatz der dreidimensionalen optischen Vermessung eine Bohrschablone konstruiert werden.

Die Bohrschablone wird passgenau an den Nachbarzähnen ausgerichtet. Sie kann zum Teil als Negativform der Oberfläche der Nachbarzähne gestaltet sein, um eine besonders passgenaue Positionierung zu ermöglichen.

Vorteilhafterweise kann die Bohrschablone so ausgebildet sein, dass sie auch zum Einsetzen des Implantats geeignet ist.

Die Bohrschablone dient zum Einsetzen des geplanten Implantats am geplanten Ort entlang der geplanten Längsachse. Dazu wird im ersten Schritt eine Bohrung mit geplanter Bohrtiefe und geplantem Bohrdurchmesser durchgeführt und im zweiten Schritt das Implantat entlang dieser Bohrung eingesetzt.

Vorteilhafterweise kann die Prothese mittelbar über ein separates Verbindungsteil mit dem Implantat verbunden sein, wobei das Verbindungsteil die Verbindungsfläche zur Prothese aufweist und mit dem Implantat verbunden ist.

Das Verbindungsteil wird einerseits mit dem Implantat und andererseits mit der Prothese über die Verbindungsfläche verbunden. Das Verbindungsteil kann rotationssymmetrisch zur der Verbindungsachse, die im wesentlichen der Einschubachse der Prothese entspricht, ausgebildet sein. Das Verbindungsteil ist mit dem Implantat so verbunden, dass die Längsachse des Implantats und die Verbindungsachse den geplanten Winkel zueinander aufweisen.

Vorteilhafterweise kann eine Verbindungsvertiefung in der Prothese in Richtung der Verbindungsachse an der Unterseite der Prothese, die der Verbindungsfläche des Verbindungsteils und somit dem 3D-Verbindungsmodell entspricht, automatisch berechnet und im 3D-Prothesenmodell angezeigt werden.

Die Verbindungsvertiefung entspricht einem Negativabdruck der Verbindungsfläche des Verbindungsteils und ist somit ebenfalls entlang der Verbindungsachse ausgerichtet. Die Planung der Verbindungsvertiefung geschieht automatisch. Die Zeitdauer der Planung der Prothese wird somit verkürzt.

Vorteilhafterweise kann die Lage und Orientierung des Implantats so ausgewählt oder automatisch so bestimmt werden, dass ein Verbindungsteil aus einer Mehrzahl von in einem Speicher abgelegten, eine vorgegebene Verbindungsfläche zwischen Verbindungsteil und Prothese einerseits und einem vorgegebenen Winkel zwischen der Verbindungsachse und der Längsachse des Implantats andererseits aufweisenden Verbindungsteile verwendbar ist.

Mehrere Verbindungsteile werden als Datensatz in einem Speicher, beispielsweise eines Computers, abgespeichert. Sie weisen verschiedene Verbindungsflächen und verschiedene Winkel zwischen der Verbindungsachse und der Längsachse des Implantats auf. Das Implantat wird in seiner Lage und Ausrichtung so geplant, dass einer dieser Verbindungsteile verwendet werden kann. Die gespeicherten Verbindungsteile sind vorgefertigt und die Fertigung eines individuell passenden Verbindungsteils erst nach dem Einsetzen des Implantats, wie es aus dem Stand der Technik bekannt ist, entfällt.

Vorteilhafterweise kann das Implantat über einen Fortsatz, der die Verbindungsfläche aufweist, mit der Prothese verbunden sein, wobei der Fortsatz ein Bestandteil des Implantats ist.

Das Implantat mit einem Fortsatz ist eine einteilige Verbindungsart für Prothesen. Die mechanische Stabilität der Verbindung und somit die Belastbarkeit des Zahnersatzteils ist gegenüber einer zweiteiligen Verbindung, wie beispielsweise über ein Verbindungsteil, verbessert.

Vorteilhafterweise kann eine der Verbindungsfläche des Fortsatzes entsprechende Verbindungsvertiefung in Richtung der Verbindungsachse an der Unterseite der Prothese automatisch berechnet werden.

Die Planung der Verbindungsvertiefung erfolgt automatisch und die Zeitdauer für die Planung der Prothese wird dadurch verringert.

Vorteilhafterweise kann die Lage und Orientierung des Implantats so ausgewählt oder automatisch so bestimmt sein, dass ein Implantat mit einem Fortsatz aus einer Mehrzahl von in einem Speicher abgelegten, eine vorgegebene Verbindungsfläche zwischen Fortsatz und Prothese einerseits und einem vorgegebenen Winkel zwischen der Verbindungsachse und der Längsachse des Implantats andererseits aufweisenden Implantaten mit einem Fortsatz verwendbar ist.

Es werden Datensätze von mehreren Implantaten mit Fortsätzen in einem Speicher, beispielsweise eines Computers, abgespeichert. Sie weisen verschiedene Verbindungsflächen und verschiedene Winkel zwischen der Verbindungsachse und der Längsachse des Implantats auf. Die Lage und Orientierung vom Implantat und dessen Fortsatz werden so geplant, dass eines der gespeicherten Implantate mit einem Fortsatz verwendet werden kann. Dadurch können vorgefertigte Implantate mit einem Fortsatz verwendet werden und die Zeitdauer der Zahnersatzversorgung wird somit verkürzt.

Vorteilhafterweise kann die Prothese als Ersatz für mehrere Zähne vorgesehen sein, wobei mehrere Implantate mit einem Fortsatz in einen Kiefer eingesetzt sind und über den Fortsatz mit der Prothese verbunden werden, wobei die Fortsätze der einzelnen Implantate unabhängig voneinander entlang der jeweiligen Verbindungsachsen ausgerichtet sind, feste Lagebeziehung zueinander aufweisen und vorzugsweise über Stege miteinander verbunden sind.

Dadurch wird eine stabile Grundkonstruktion aus Implantaten mit Fortsätzen und Stegen für eine Prothese als Ersatz für mehrere Zähne bereitgestellt. Jedes einzelne Implantat kann so geplant werden, dass vorgefertigte Implantate mit Fortsätzen verwendet werden können. Diese Verbindungsart wird vorwiegend für nicht abnehmbare Prothesen verwendet.

Vorteilhafterweise kann die Prothese über ein Basisstück unmittelbar mit dem Implantat verbunden sein, wobei das Basisstück Bestandteil der Prothese ist und die Kontaktfläche zwischen dem Basisstück und dem Implantat der Verbindungsfläche entspricht.

Das Basisstück bildet ein passendes Gegenstück zur Anschlussfläche des Implantats und wird als Bestandteil der Prothese geplant und gefertigt.

Vorteilhafterweise kann die Lage des Basisstücks mit einer Orientierung in Richtung der Verbindungsachse automatisch berechnet werden.

Das Basisstück schließt unmittelbar an die Anschlussfläche des Implantats an. Die Kontaktfläche zwischen dem Basisstück und dem Implantat stellt die Verbildungsfläche dar.

Durch die automatische Planung des Basisstücks wird die Zeitdauer für die Zahnersatzversorgung verkürzt.

Vorteilhafterweise kann die Prothese als Ersatz für mehrere Zähne vorgesehen sein, wobei mehrere Basisstücke die Prothese mit den Implantaten entlang der jeweiligen voneinander unabhängigen Verbindungsachsen verbinden, feste Lagebeziehung zueinander aufweisen und vorzugsweise über Stege miteinander verbunden sind.

Dadurch wird eine in der Prothese integrierte Grundkonstruktion bereitgestellt, die zu den unterschiedlich ausgerichteten Implantaten passend ist und die notwendige mechanische Stabilität gewährleistet. Diese Verbindungsart wird vorwiegend für abnehmbare Prothesen verwendet.

Vorteilhafterweise kann die Prothese trennbar von der Verbindungsfläche gestaltet und somit abnehmbar sein.

Die Verbindung über ein Basisteil, über ein einteiliges Implantat mit einem Fortsatz oder über ein separates Verbindungsteil kann trennbar gestaltet sein. Die Prothese sowohl als Ersatz für einzelne als auch für mehrere Zähne ist somit abnehmbar.

Weiterhin betrifft diese Offenbarung eine Vorrichtung zur Herstellung von Zahnersatzteilen, umfassend ein Implantat zum Einsetzen in einen Kiefer und eine Prothese zur Befestigung an dem Implantat über eine Verbindungsfläche. Dabei wird ein erster Messdatensatz einer 3D-Röntgenaufnahme im Bereich der einzusetzenden Prothese unter Verwendung von Röntgenaufnahmemitteln bereitgestellt und auf einer Anzeigeeinheit als ein 3D-Röntgenmodell dargestellt.

Ein zweiter Messdatensatz einer dreidimensionalen optischen Vermessung der sichtbaren Oberfläche des Kiefers und von zumindest Teilen der Nachbarzähne im Bereich der einzusetzenden Prothese wird unter Verwendung von optischen Aufnahmemitteln bereitgestellt.

Dabei ist der Messdatensatz der 3D-Röntgenaufnahme mit dem Messdatensatz der dreidimensionale optische Vermessung bezüglich der Geometrie in Korrelation gesetzt.

Ein Datensatz der Oberfläche der Prothese ist als ein 3D-Prothesenmodell unter Verwendung eines Datenverarbeitungsmittels bereitgestellt.

Das 3D-Prothesenmodell wird im korrelierten 3D-Röntgenmodell auf der Anzeigeeinheit lagerichtig angezeigt. Ein Datensatz des Implantats in dem korrelierten 3D-Röntgenmodell wird ebenfalls auf der Anzeigeeinheit als ein 3D-Implantatmodell angezeigt und über Eingabemittel, vorzugsweise aber automatisch, unter Verwendung des Datenverarbeitungsmittels und unter Berücksichtigung des 3D-Prothesenmodells und des 3D-Röntgenmodells in dem korrelierten 3D-Röntgenmodell zumindest grob positioniert und gegebenenfalls bezüglich der Art ausgewählt und in den Abmessungen angepasst.

Die Vorrichtung umfasst also Mittel, die in der Lage sind das erfinderische Verfahren durchzuführen. Vorteilhafterweise kann ein Datensatz der Verbindungsfläche als ein 3D-Verbindungsmodell korrelierten 3D-Röntgenmodell lagerichtig angezeigt und das 3D-Prothesenmodell wird in seiner Form automatisch unter Verwendung des Datenverarbeitungsmittels an das 3D-Verbindungsmodell der Verbindungsfläche angepasst werden. Das Datenverarbeitungsmittel ermöglicht die automatische Anpassung des angezeigten 3D-Prothesenmodells an das angezeigte 3D-Verbindungsmodell. Die digitalen Oberflächendaten des 3D-Prothesenmodells werden im Kontaktbereich mit der Verbindungsfläche modifiziert und an die Oberflächendaten des 3D-Verbindungsmodells angepasst.

Die vorliegende Offenbarung beschreibt weiterhin eine Bohrschablone zur Anbringung einer Implantatbohrung, wobei sie zudem so ausgebildet ist, dass sie zum Einsetzen des geplanten Implantats nach dem erfinderischen Verfahren geeignet ist.

Durch die Anwendung der Bohrschablone wird eine präzise Anbringung der Implantatbohrung und ein Einsetzen des Implantats entsprechend seiner geplanten Lage und Orientierung auf eine einfache Art und Weise ermöglicht.

### Kurzbeschreibung der Zeichnung

Das erfindungsgemäße Verfahren und die beschriebenen Vorrichtungen werden anhand von Zeichnungen erläutert. Es zeigen:
- Fig. 1: eine Vorrichtung zur Anzeige unterschiedlicher gespeicherter und aufrufbarer 3D-Modelle zur Durchführung des Verfahrens gemäß der Erfindung;
- Fig. 2: ein 3D-Restaurationsmodell des Kiefers und von zumindest Teilen der Nachbarzähne im Bereich der einzusetzenden Prothese;
- Fig. 3: eine Darstellung eines 3D-Röntgenmodells beider Kiefer in der Art einer Panoramaschichtaufnahme;
- Fig. 4: eine Mischdarstellung des 3D-Röntgenmodells und des 3D-Restaurationsmodells mit einem Überblendungsverhältnis;
- Fig. 5: ein 3D-Prothesenmodell für eine Prothese in dem 3D-Restaurationsmodell;
- Fig. 6: das 3D-Prothesenmodell aus Fig. 5 in einem Teilbereich des korrelierten 3D-Röntgenmodells aus Fig. 3;
- Fig. 7: eine Darstellung des 3D-Röntgenmodells beider Kiefer aus Fig. 3 mit einer Einhüllenden aller 3D-Implantatmodelle und dem 3D-Prothesenmodell als Vollkörper;
- Fig. 8: zwei Schichtaufnahmen des 3D-Röntgenmodells aus Fig. 6 für die Auswahl und die Positionierung der Einhüllenden aller 3D-Implantatmodelle anhand anatomischer Strukturen;
- Fig. 9: zwei Schichtaufnahmen des 3D-Röntgenmodells aus Fig. 6 für die Positionierung eines ausgewählten 3D-Implantatmodells und eines als ein 3D-Verbindungsmodell angezeigten Verbindungsteils innerhalb des 3D-Prothesenmodells mit α von 180°;
- Fig. 10: eine Bohrschablone zur Herstellung der Implantatbohrung und zum Einsetzen des Implantats;
- Fig. 11: zwei Schichtaufnahmen wie in Fig. 8 des 3D-Röntgenmodells zur Positionierung eines ausgewählten 3D-Implantatmodells und eines als ein 3D-Verbindungsmodell angezeigten Verbindungsteils innerhalb des 3D-Prothesenmodells mit α von 160°;
- Fig. 12: zwei Schichtaufnahmen wie in Fig. 8 des 3D-Röntgenmodells zur Positionierung eines ausgewählten 3D-Implantatmodells und eines als ein 3D-Verbindungsmodell angezeigten Verbindungsteils bei α von 180° und β von 22°;
- Fig. 13: zwei Schichtaufnahmen wie in Fig. 8 des 3D-Röntgenmodells zur Positionierung eines ausgewählten 3D-Implantatmodells und eines als ein 3D-Verbindungsmodell für ein einteiliges Implantat mit einem Fortsatz bei α von 180°;
- Fig. 14: zwei Schichtaufnahmen wie in Fig. 8 des 3D-Röntgenmodells zur Positionierung eines ausgewählten 3D-Implantatmodells und eines als ein 3D-Basisteilmodell dargestellten Basisteils;
- Fig. 15: eine Darstellung eines Teilbereichs des 3D-Röntgenmodells aus Fig. 7 mit einer Prothese, die mittelbar über Verbindungsteile an vier Implantaten befestigt ist;
- Fig. 16: eine Darstellung eines Teilbereichs des 3D-Röntgenmodells aus Fig. 7 mit einer Prothese, die mit vier einteiligen Implantaten mit Fortsätzen am Kiefer befestigt ist;

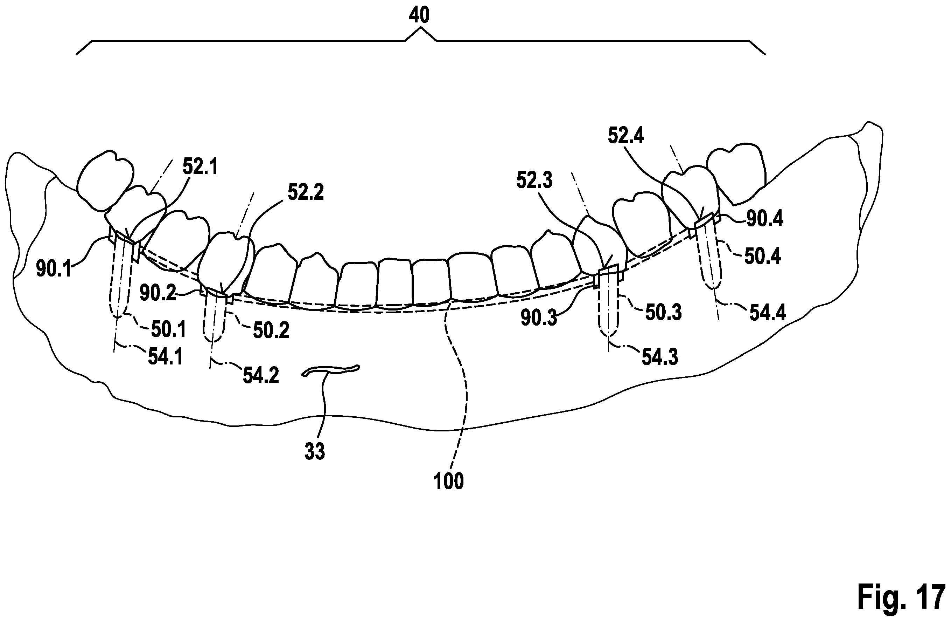

- Fig. 17: eine Darstellung eines Teilbereichs des 3D-Röntgenmodells aus Fig. 7 mit einer Prothese, die über Basisteile mit vier Implantaten am Kiefer befestigt ist.

### Ausführungsbeispiel

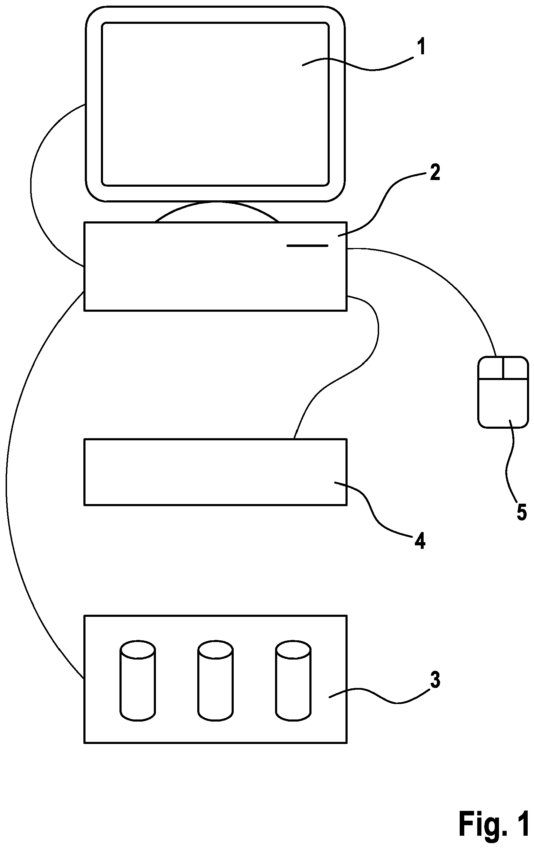

In Fig. 1 ist eine Anzeigeeinheit 1, eine Datenverarbeitungseinheit 2, ein Speicher 3 und Eingabemittel 4 und 5 zur Anzeige unterschiedlicher gespeicherter und aufrufbarer 3D-Modelle zur Durchführung des Verfahrens gemäß der Erfindung dargestellt. Die Eingabemittel 4 und 5 sind mit der Datenverarbeitungseinheit 2 verbunden und dienen der manuellen Auswahl und Positionierung der verschiedenen 3D-Modelle. Die Datenverarbeitung 2 ermöglich die automatische Auswahl, Positionierung und Anpassung der 3D-Modelle. Zur visuellen Kontrolle werden die 3D-Modelle auf der Anzeigeeinheit 1 dargestellt. Der Speicher enthält mehrere Datensätze für 3D-Modelle die auf der Anzeigeeinheit dargestellt werden können und entweder manuell über die Eingabemittel 4 und 5 oder automatisch durch die Datenverarbeitungseinheit 2 ausgewählt werden.

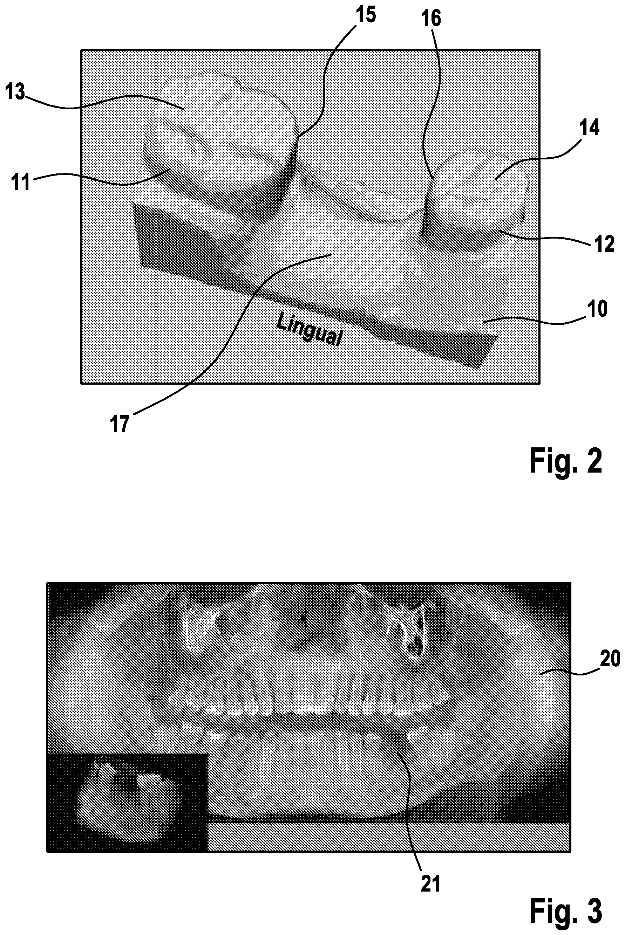

In Fig. 2 ist ein 3D-Restaurationsmodell 10 aus einem Messdatensatz einer dreidimensionalen optischen Vermessung der sichtbaren Oberfläche des Kiefers und von zumindest Teilen der Nachbarzähne 11 und 12 im Bereich der einzusetzenden Prothese dargestellt. Für die Planung eines passgenauen Zahnersatzes sind vor allem Okklusalflächen 13 und 14, Seitenflächen 15 und 16 der Nachbarzähne und eine Gingivaoberfläche 17 in der Zahnlücke wesentlich.

In Fig. 3 ist ein 3D-Röntgenmodell 20 beider Kiefer aus einem Messdatensatz einer 3D-Röntgenaufnahme dargestellt. Es handelt sich um eine Panoramaschichtaufnahme. Eine Zahnlücke 21 am unteren Kiefer an dritter Stelle von rechts soll mit einem Zahnersatzteil versorgt werden.

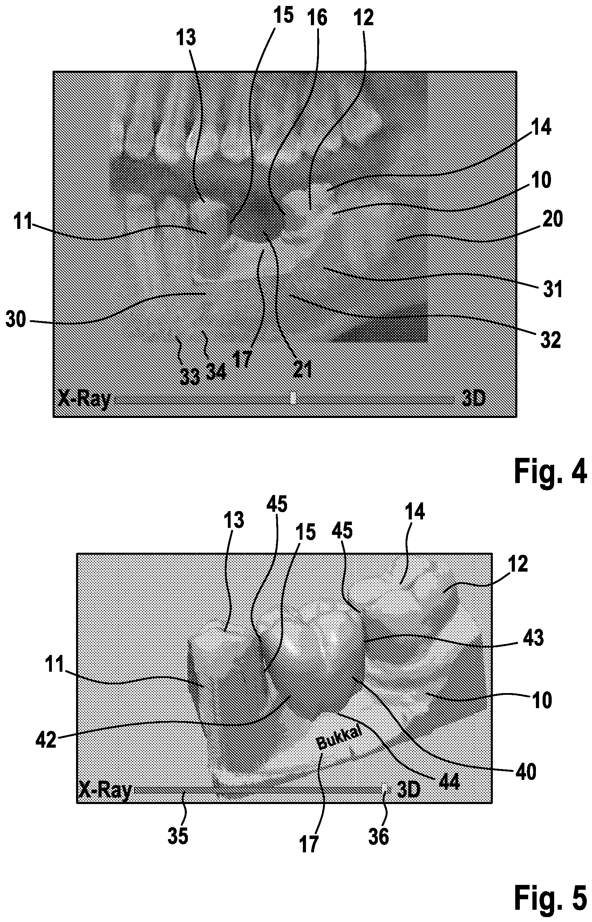

In Fig. 4 ist eine Mischdarstellung des 3D-Röntgenmodells 20 aus dem Messdatensatz der 3D-Röntgenaufnahme und des 3D-Restaurationsmodell 10 aus dem Messdatensatz der dreidimensionalen optischen Vermessung, die bezüglich der Geometrie in Korrelation zueinander gesetzt sind, gezeigt. Dabei erkennt man einerseits die sichtbaren Strukturen wie die Okklusalflächen 13 und 14 und die Seitenflächen 15 und 16 der Nachbarzähne 11 und 12 sowie die Gingivaoberfläche 17 in der Zahnlücke 21 aus dem 3D-Restaurationsmodell 10 und andererseits die unsichtbaren anatomischen Strukturen wie die Zahnwurzeln 30 und 31 der Nachbarzähne 11 und 12, der Kieferknochen 32 und Nerven 33 aus dem 3D-Röntgenmodell 20 im tatsächlichen geometrischen Verhältnis zueinander. Dadurch sind alle für die Planung der Prothese und des Implantats notwendige Strukturen dargestellt. Unterhalb der Mischdarstellung ist ein Schieberegler 35 zur Steuerung eines Überblendungsverhältnisses der Mischdarstellung dargestellt. In der rechten Endstellung 36 des Schiebereglers wird ausschließlich das 3D-Restaurationsmodell 10 eingeblendet und in der linken Endstellung 37 ausschließlich das 3D-Röntgenmodell 20 eingeblendet. In der dargestellten Situation ist der Schieberegler 35 in einer mittleren Stellung und die beiden Modelle 10 und 20 werden überlagert angezeigt.

In Fig. 5 ist ein 3D-Prothesenmodell 40 aus einem Datensatz für eine zu den Nachbarzähnen passgenaue Prothese in dem 3D-Restaurationsmodell 10 dargestellt. Das 3D-Prothesenmodell 40 ist so gestaltet, dass dessen Okklusalfläche 41 auf der Höhe der Okklusalflächen 13 und 14 der Nachbarzähne 11 und 12 liegt, dass dessen Seitenflächen 42 und 43 zu den Seitenflächen 15 und 16 der Nachbarzähne passgenau sind, dass dessen Grenzfläche 44 mit der Gingivaoberfläche 17 abschließt und dass dessen Okklusalfläche 41 passend zur Okklusalfläche der Gegenzähne ist. Der Schieberegler 35 ist in der rechten Endstellung 36, so dass ausschließlich das 3D-Restaurationsmodell 10 angezeigt ist. Das 3D-Prothesenmodell 40 kommt an den Kontaktflächen 45 mit den Nachbarzähnen 11 und 12 in Berührung. Bei Belastung werden Kontaktkräfte an den Kontaktflächen 45 übertragen.

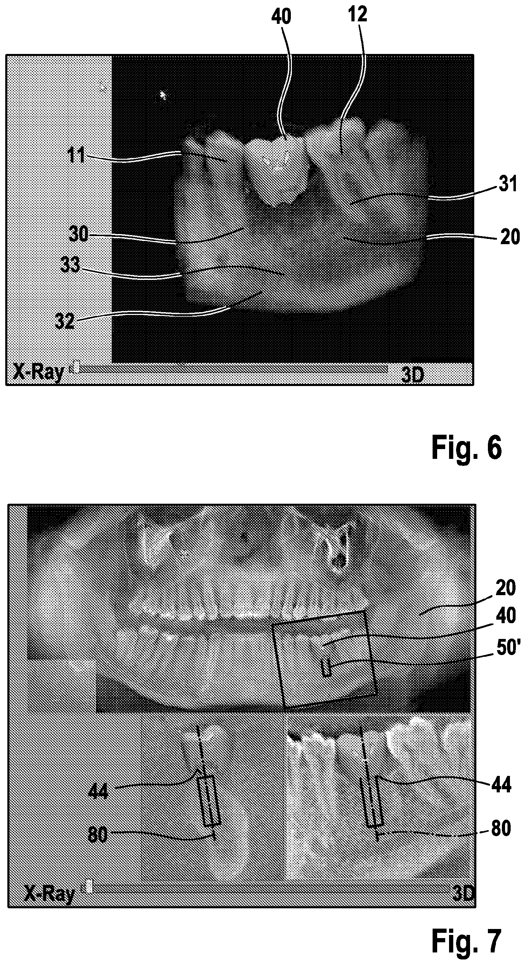

In Fig. 6 ist das 3D-Prothesenmodell 40 aus Fig. 5 in einem Teilbereich des korrelierten 3D-Röntgenmodells 20 aus Fig. 3 dargestellt. Das 3D-Prothesenmodell 40 aus Fig. 5 bleibt unverändert, wobei der Schieberegler 35 in die linke Endposition 37 gebracht wurde und ausschließlich das 3D-Röntgenmodell 20 angezeigt wird, wobei das 3D-Restaurationsmodell 10 ausgeblendet wurde. Das geplante 3D-Prothesenmodell 40 ist also in seiner tatsächlichen Lage und Orientierung gegenüber den anatomischen Strukturen wie den Zahnwurzeln 30 und 31 der Nachbarzähne 11 und 12, der Kieferknochen 32 und Nerven 33 aus dem 3D-Röntgenmodell 20 dargestellt.

In Fig. 7 ist eine Darstellung des gesamten 3D-Röntgenmodells 20 beider Kiefer aus Fig. 3 mit einer Einhüllenden 50' aller 3D-Implantatmodelle und dem 3D-Prothesenmodell 40 als Vollkörper. Die Einhüllende 50' weist die Form eines Zylinders, der geschnitten einen Viereck darstellt. Die Einhüllende 50' ist so bemessen, dass alle Arten von Implantaten für die jeweilige Zahnregion in die Einhüllende hineinpassen. Für jede Zahnregion werden also im Normalfall Implantate mit gleichen Abmessungen verwendet, weil die Lage und Abmessungen der anatomischen Strukturen bei verschiedenen Patienten nur geringfügig voneinander abweichen. Bei Backenzähnen werden beispielsweise kürzere und breitere Implantate und bei Schneidezähnen längere und schmalere Implantate verwendet. Die Einhüllende 50' wird möglichst entlang der Prothesenachse 80 ausgerichtet. Dabei wird die Endfläche der Einhüllenden 50' an der Schnittstelle der Prothesenachse 80 mit der Grenzfläche 44 des 3D-Prothesenmodells 40 oder etwas darüber positioniert. Die grobe Positionierung der Einhüllenden 50' erfolgt automatisch und kann nachträglich über Eingabemitteln nachpositioniert werden.

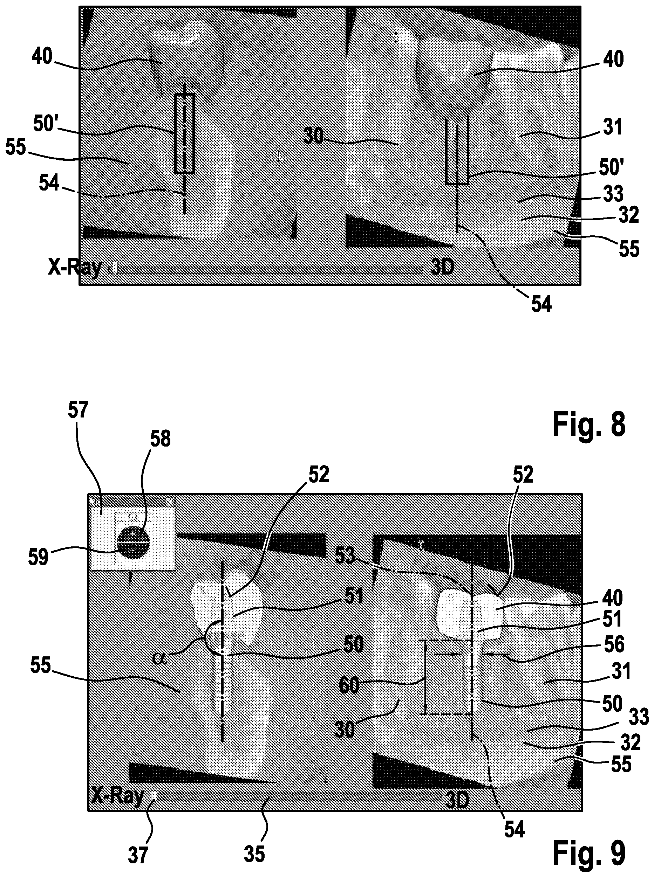

In der rechten Darstellung aus Fig. 8 ist eine erste Schnittdarstellung des 3D-Röntgenmodells 20 aus Fig. 6 längs zum Kiefer zur feinen Positionierung der Einhüllenden 50' unter Berücksichtigung der anatomischer Strukturen 30, 31, 32 und 33 aus dem 3D-Röntgenmodell 20 dargestellt.

Bei der Schnittdarstellung handelt es sich um eine Schichtaufnahme 55 aus dem 3D-Röntgenmodell 20 längst zum Kiefer, der einen berechneten Volumendatensatz darstellt und durch eine Panoramaschichtaufnahme erzeugt wurde. Bei der Panoramaschichtaufnahme wird unter Verwendung von Röntgenaufnahmen aus unterschiedlichen Richtungen durch Bildrekonstruktion ein Messdatensatz des aufgenommenen Objekts berechnet, der Absorptionskoeffizienten einzelner Volumenelemente des aufgenommenen Objekts enthält. Der Messdatensatz wird im vorliegenden Fall als das 3D-Röntgenmodell 20 dargestellt. Die Abmessung eines Volumenelements legt die kleinste Schichtdicke von 0,15 mm einer Schichtaufnahme 55 fest. Die Schichtdicke der dargestellten Schichtaufnahme 55 kann größer als die kleinste Schichtdicke von 0,15 mm gewählt werden. Die dargestellte Schichtaufnahme 55 aus dem 3D-Röntgenmodell 20 ist so gewählt, dass eine Längsachse 54 des positionierten 3D-Impantatmodell 50 in der Ebene der Schichtaufnahme 55 liegt.

In der linken Darstellung aus Fig. 8 ist eine zweite Schnittaufnahme 55 aus dem 3D-Röntgenmodells 20 aus Fig. 6 quer zum Kiefer zur feinen Positionierung der Einhüllenden 50' unter Berücksichtigung der anatomischer Strukturen 30, 31, 32 und 33 aus dem 3D-Röntgenmodell 20 dargestellt.

Die feine Positionierung kann automatisch oder durch Eingabemittel 4, 5 erfolgen. Bei der automatischen Positionierung müssen die anatomischen Strukturen 30, 31, 32 und 33 als Volumenbereiche mit definierten Grenzen von der Datenverarbeitungseinheit 1 erkannt werden, um bei der feinen Positionierung die Einhüllende 50' zu diesen anatomischen Strukturen entsprechend zu beanstanden.

In der rechten Darstellung aus Fig. 9 ist eine erste Schnittdarstellung des 3D-Röntgenmodells 20 aus Fig. 6 längs zum Kiefer zur Positionierung des ausgewählten 3D-Implantatmodells 50, das innerhalb der Einhüllenden 50' positioniert und entlang der Längsachse 54 ausgerichtet wird. Das ausgewählte 3D-Implantatmodell 50 weist also einen größeren Abstand zu den anatomischen Strukturen 30, 31, 32 und 33 als die Einhüllende 50' auf. Im dargestellten Fall wurde ein 3D-Implantatmodell 50 mit einem eines als ein 3D-Verbindungsmodell angezeigten Verbindungsteils innerhalb des 3D-Prothesenmodells mit α von 180°;
und zur Auswahl und Positionierung eines 3D-Verbindungsmodells 51 eines Verbindungsteils, das eine Verbindungsfläche 52 zum 3D-Prothesenmodell 40 aufweist, wobei dessen Verbindungsachse 53 mit einer Längsachse 54 des 3D-Implantatmodells 50 übereinstimmen, dargestellt.

Dabei handelt es sich um eine mittelbare Verbindung des Implantats an die Prothese über ein Verbindungsteil, das als das 3D-Verbindungsmodell 51 dargestellt ist.

Bei der Schnittdarstellung handelt es sich um eine Schichtaufnahme 55 aus dem 3D-Röntgenmodell 20, der einen berechneten Volumendatensatz darstellt, längst zum Kiefer, die durch eine Panoramaschichtaufnahme erzeugt wurde. Bei der Panoramaschichtaufnahme wird unter Verwendung von Röntgenaufnahmen aus unterschiedlichen Richtungen durch Bildrekonstruktion ein Messdatensatz des aufgenommenen Objekts berechnet, der Absorptionskoeffizienten einzelner Volumenelemente des aufgenommenen Objekts enthält. Der Messdatensatz wird im vorliegenden Fall als das 3D-Röntgenmodell 20 dargestellt. Die Abmessung eines Volumenelements legt die kleinste Schichtdicke von 0,15 mm einer Schichtaufnahme 55 fest. Die Schichtdicke kann auch größer als die kleinste Schichtdicke von 0,15 mm gewählt werden. Die dargestellte Schichtaufnahme 55 aus dem 3D-Röntgenmodell 20 ist so gewählt, dass eine Längsachse 54 des positionierten 3D-Impantatmodell 50 in der Ebene der Schichtaufnahme 55 liegt.

Für den Fall, dass der Durchmesser 56 des positionierten 3D-Implantatmodells 50 größer als die Schichtdicke der Schichtaufnahme 55 ist, werden benachbarte Schichtaufnahmen betrachtet. Dafür ist ein Steuerungsmittel 57 mit zwei Schaltflächen 58 und 59 vorgesehen. Nach Betätigung der oberen Schaltfläche 58 wird die benachbarte, hinter der Schichtaufnahme 55 liegende Schicht und nach Betätigung der unteren Schaltfläche 59 wird die benachbarte, vor der Schichtaufnahme 55 liegende Schicht angezeigt. Dadurch wird die Navigation durch die Schichten des 3D-Röntgenmodells 20 ermöglicht. Beim Betätigen des Steuerungselement wird die Schnittdarstellung des 3D-Prothesenmodells 40 und des darin befindlichen 3D-Verbindungsmodells 51 um die Schichtdicke verrückt, so dass die Schnittdarstellung des 3D-Prothesenmodells 40 und des darin befindlichen 3D-Verbindungsmodells 51 mit der angezeigten Schicht des 3D-Röntgenmodells 20 in einer Ebene liegen.

Im ersten Schritt wird die Art, die Abmessungen, die Lage und die Ausrichtung des 3D-Implantatmodells 50 ausgewählt. Einerseits müssen die Art und die Abmessungen, wie etwa der Durchmesser 56 und die Länge 60, so gewählt werden, das die Belastung durch Kontaktkräfte an den Kontaktflächen der Prothese zu den Nachbarzähnen nicht zum Bruch des Implantats oder des Verbindungsteils führt. Andererseits müssen die Abmessungen 56 und 60, die Lage und die Orientierung der Längsachse 54 so gewählt werden, dass die anatomischen Strukturen 30, 31, 32, 33 und 34 aus dem 3D-Röntgenmodell 20 berücksichtigt werden.

Die Betätigung des Steuerungsmittels 57 und des Schiebereglers 35 einerseits und die manuelle Auswahl und Positionierung des 3D-Implantatmodells 50 und des 3D-Verbindungsmodells 51 andererseits erfolgt durch Eingabemittel 4 und 5 aus Fig. 1.

Alternativ dazu kann die Auswahl und die Positionierung des 3D-Implantatmodells 50 unter Berücksichtigung der oben genannten Bedingungen durch die Datenverbarbeitseinheit 2 aus Fig. 1 automatisch erfolgen.

Im zweiten Schritt wird einerseits die Verbindungsfläche 52 des 3D-Verbindungsmodell 51 zum 3D-Prothesenmodell 40 und andererseits der Winkel α zwischen der Verbindungsachse 53 des 3D-Verbindungsmodell 51 und der Längsachse 54 des 3D-Implantatmodells 50 ausgewählt. Dabei darf der Abstand 61 zwischen dem 3D-Verbindungsmodell 51 und dem Rand des 3D-Prothesenmodells 40 einen vorgegebenen Wert nicht unterschreiten, um die nötige Stabilität der Prothese zu gewährleisten.

Das 3D-Implantatmodell 50 wird aus mehreren 3D-Implantatmodellen und das 3D-Verbindungsmodell 51 aus mehreren 3D-Verbindungsmodellen ausgewählt, die im Speicher 3 aus Fig. 1 abgelegt sind und die dazugehörigen Implantate und Verbindungsteile vorgefertigt vorliegen. Der Winkel α wird also so gewählt, dass ein vorgefertigtes Verbindungsteil mit diesem Winkel α verwendet werden kann. Im vorliegenden Fall wurde der Winkel α von 180° gewählt, d. h. die Teile fluchten.

In der linken Darstellung aus Fig. 8 ist eine zweite Schnittaufnahme 55 aus dem 3D-Röntgenmodells 20 aus Fig. 6 quer zum Kiefer zur Auswahl und Positionierung des 3D-Implantatmodells 50 und des 3D-Verbindungsmodells 51 wie in der rechten Darstellung aus Fig. 8, dargestellt.

Nach der Positionierung des 3D-Prothesenmodells 50 und des 3D-Verbindungsmodells 51 längst und quer zum Kiefer ist die räumliche Lage und Orientierung festgelegt.

In Fig. 9 ist eine Bohrschablone 70 mit Anlageflächen 71 und 72 auf den Okklusalflächen 13 und 14 der Nachbarzähne 11 und 12 aus Fig. 4 zum Einsetzen des Implantats nach dem 3D-Implantatmodell 50 aus Fig. 8 dargestellt. Die Anlageflächen 71 und 72 sind als Negativabdrücke der Okklusalflächen 13 und 14 der Nachbarzähne 11 und 12 geformt. Die Bohrschablone 70 weist ein Führungsloch 73 auf, das zum Anbringen einer Implantatbohrung 74 im Kieferknochen 32 und zum Einsetzen des geplanten Implantats vorgesehen ist. Die Mittelachse 75 des Führungslochs 74 stimmt mit der Längsachse des geplanten Implantats 54 überein. Die Bohrschablone 70 kann automatisch durch das Datenverarbeitungsmittel 2 unter Verwendung einerseits der Daten über die Okklusalflächen 13 und 14 der Nachbarzähne aus dem 3D-Rekonstruktionsmodell 10 und andererseits der Daten über die Lage, Ausrichtung der Längsachse 54, des Durchmessers 56 und der Länge 60 des 3D-Implantatmodells 50 geplant werden.

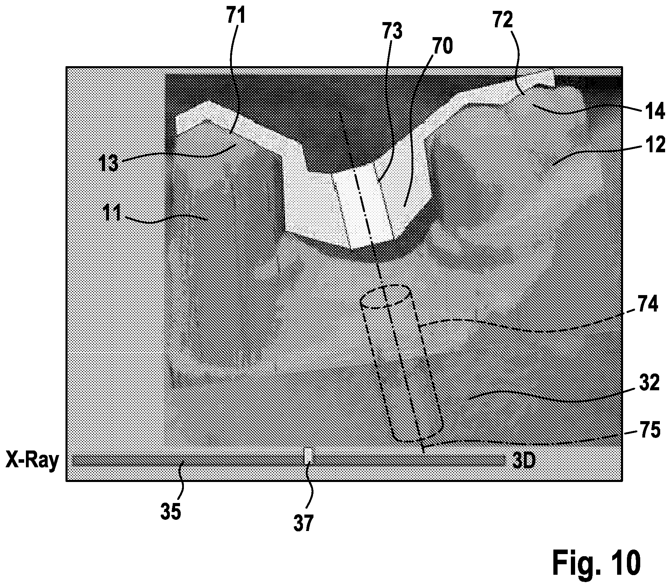

In Fig. 10a ist eine erste Schichtaufnahme 55 aus dem 3D-Röntgenmodell 20 längs zum Kiefer und in Fig. 10b eine zweite Schichtaufnahme 55 aus dem 3D-Röntgenmodell 20 quer zum Kiefer wie in Fig. 8 zur Positionierung des 3D-Implantatmodells 50 und des 3D-Verbindungsmodells 51 des Verbindungsteils dargestellt. Das 3D-Verbindungsmodell 51 weist eine Verbindungsfläche 52 auf, die entlang der Verbindungsachse 53 ausgerichtet ist. Der Winkel α zwischen der Verbindungsachse 53 des Verbindungsteils und der Längsachse 54 des Implantats beträgt 160°, wobei die beiden Achsen 53 und 54 in einer Ebene längst zum Kiefer liegen. Die Ausrichtung des 3D-Prothesenmodells 40 ist durch eine Prothesenachse 80 gekennzeichnet, die senkrecht zur Okklusalfläche 41 des 3D-Prothesenmodells 40 ist. Im dargestellten Fall stimmt die Prothesenachse 80 mit der Verbindungsachse 53 überein. Bei der Positionierung des 3D-Implantatmodells 50 wurden anatomische Strukturen 30, 31, 32, 33 und 34 berücksichtigt und das 3D-Verbindungsmodell 51 zu einem passenden Verbindungsteil mit dem Winkel α von 160°, vorzugsweise automatisch, ausgewählt.

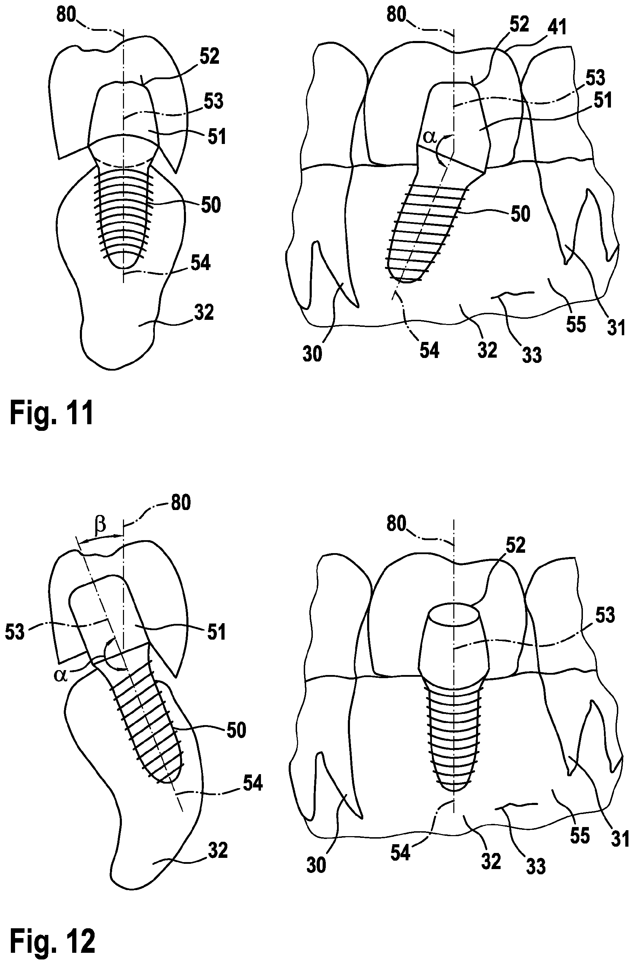

In Fig. 11a ist eine erste Schichtaufnahme 55 aus dem 3D-Röntgenmodell 20 längs zum Kiefer und in Fig. 11b eine zweite Schichtaufnahme 55 aus dem 3D-Röntgenmodell 20 quer zum Kiefer zur Positionierung des ausgewählten 3D-Implantatmodells 50 und des 3D-Verbindungsmodells 51 mit der Verbindungsfläche 52 des Verbindungsteils dargestellt. Die Verbindungsachse 53 des Verbindungsteils stimmt mit der Längsachse 54 des Implantats überein. Die Prothesenachse 80 weist einen Winkel β von 20° zur Verbindungsachse 53 auf und die beiden Achsen liegen in einer Ebene quer zum Kiefer.

In Fig. 12a ist eine erste Schichtaufnahme 55 aus dem 3D-Röntgenmodell 20 längs zum Kiefer und eine zweite Schichtaufnahme 55 aus dem 3D-Röntgenmodell in Fig. 12b des 3D-Röntgenmodells 20 quer zum Kiefer zur Positionierung eines ausgewählten einteiligen Implantats mit einem Fortsatz. Der untere Implantatteil, der in den Kieferknochen eingebracht wird, ist als das 3D-Implantatmodell 50 und der Fortsatz, der mit der Prothese verbunden wird, ist als das 3D-Verbindungsmodell 51 mit einer Verbindungsfläche 52 dargestellt. Die Prothesenachse 80, die Verbindungsachse 53 des Fortsatzes und die Längsachse 54 des unteren Implantatteils stimmen überein.

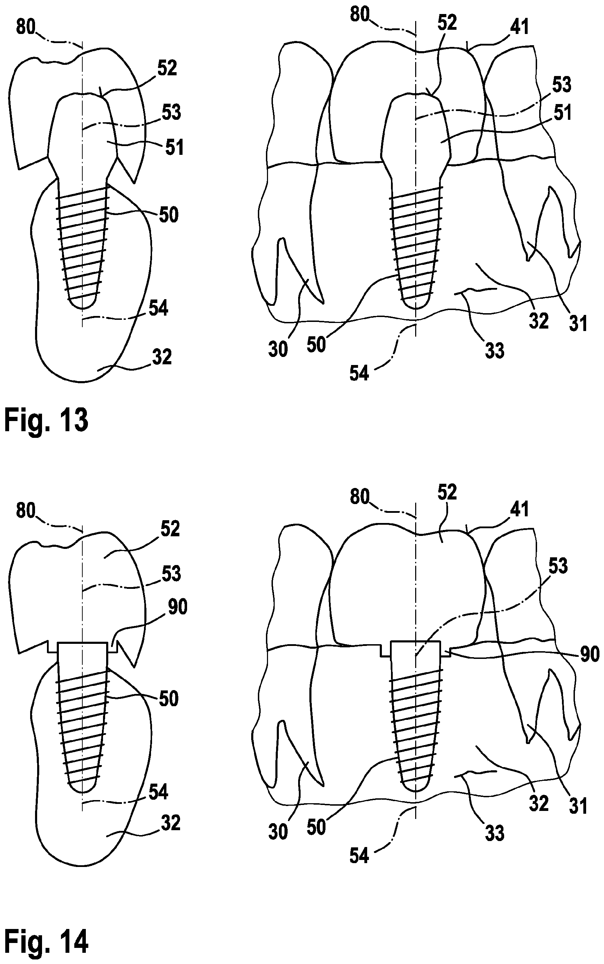

In Fig. 13a ist eine erste Schichtaufnahme 55 des 3D-Röntgenmodells 20 längs zum Kiefer und in Fig. 13b eine zweite Schichtaufnahme 55 des 3D-Röntgenmodells 20 quer zum Kiefer mit einem Basisteil, das als ein 3D-Basisteilmodell 90 dargestellt und mit dem als ein 3D-Implantatmodell 50 dargestelltem Implantat verbunden ist, wobei die Prothesenachse 80, die Verbindungsachse 53 des 3D-Basisteilmodell 90 und die Längsachse 54 des 3D-Implantatmodells 50 übereinstimmen. Das 3D-Basisteilmodell 90 weist die Verbindungsfläche 52 zum 3D-Implantatmodell 50 auf. Die Prothese ist abnehmbar, da das Basisteil vom Implantat trennbar gestaltet ist.

In Fig. 14 ist eine Darstellung eines Teilbereichs des 3D-Röntgenmodells 20 aus Fig. 7 des gesamten unteren Kiefers mit einem 3D-Prothesenmodell 40 für eine Prothese als Ersatz für alle Zähne des unteren Kiefers dargestellt. Die Prothese wird über vier Verbindungsteile mit den jeweiligen Implantaten am Kiefer befestigt, wobei die Verbindungsteile über Stege fest miteinander verbunden sind. Die 3D-Verbindungsmodelle 51.1 bis 51.4 mit Verbindungsflächen 52.1 bis 52.4 der Verbindungsteile sind unabhängig voneinander entlang der jeweiligen Verbindungsachsen 53.1 bis 53.4 ausgerichtet und die 3D-Implantatmodelle 50.1 bis 50.4 sind entlang der jeweiligen Längsachsen 54.1 bis 54.4 ausgerichtet. Die 3D-Implantatmodelle und die 3D-Verbindungsmodelle wurden aus einer Mehrzahl von 3D-Implantatmodellen mit vorgegebenen Abmessungen und vorgegebenem Winkel α unter Berücksichtigung der anatomischer Strukturen und des 3D-Prothesenmodells 40, vorzugsweise automatisch, ausgewählt.

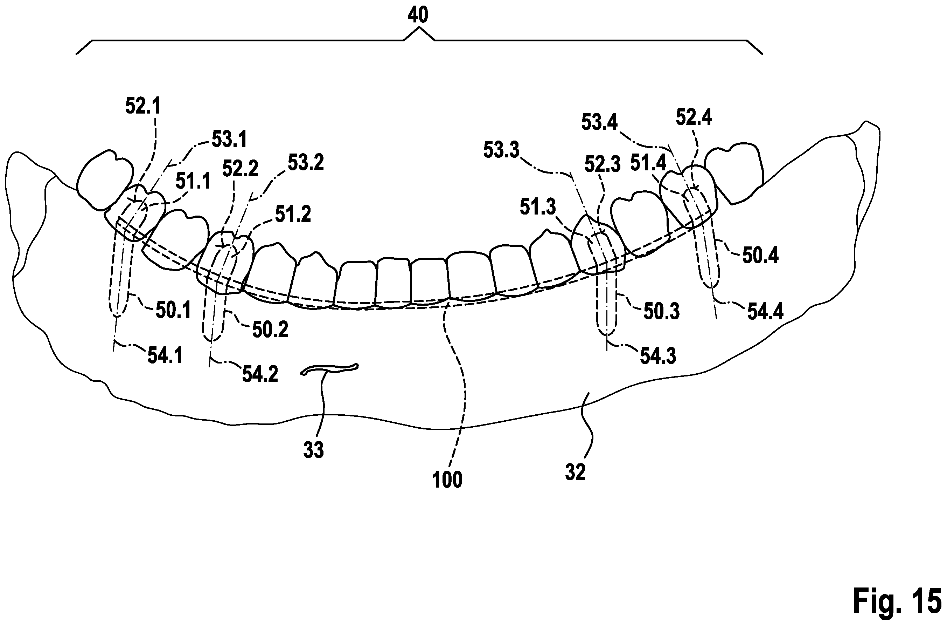

In Fig. 15 ist eine Darstellung eines Teilbereichs des 3D-Röntgenmodells 20 aus Fig. 7 des gesamten unteren Kiefers mit einem 3D-Prothesenmodell 40 für eine Prothese als Ersatz für alle Zähne des unteren Kiefers wie in Fig. 14 dargestellt. Die Prothese wird über vier einteilige Implantate mit Fortsätzen am Kiefer befestigt, wobei die Fortsätze über Stege fest miteinander verbunden sind. Die 3D-Verbindungsmodelle 51.1 bis 51.4 mit Verbindungsflächen 52.1 bis 52.4 der Fortsätze sind unabhängig voneinander entlang der jeweiligen Verbindungsachsen 53.1 bis 53.4 ausgerichtet und die 3D-Implantatmodelle 50.1 bis 50.4 der unteren Implantatteile sind entlang der jeweiligen Längsachsen 54.1 bis 54.4 ausgerichtet. Die 3D-Implantatmodelle 50.1 bis 50.4 und die 3D-Verbindungsmodelle 51.1 bis 51.4 von einteiligen Implantaten mit Fortsätzen wurden aus einer Mehrzahl von 3D-Implantatmodellen und 3D-Verbindungsmodellen mit vorgegebenen Abmessungen und vorgegebenem Winkel α unter Berücksichtigung der anatomischer Strukturen und des 3D-Prothesenmodells 40, vorzugsweise automatisch, ausgewählt.

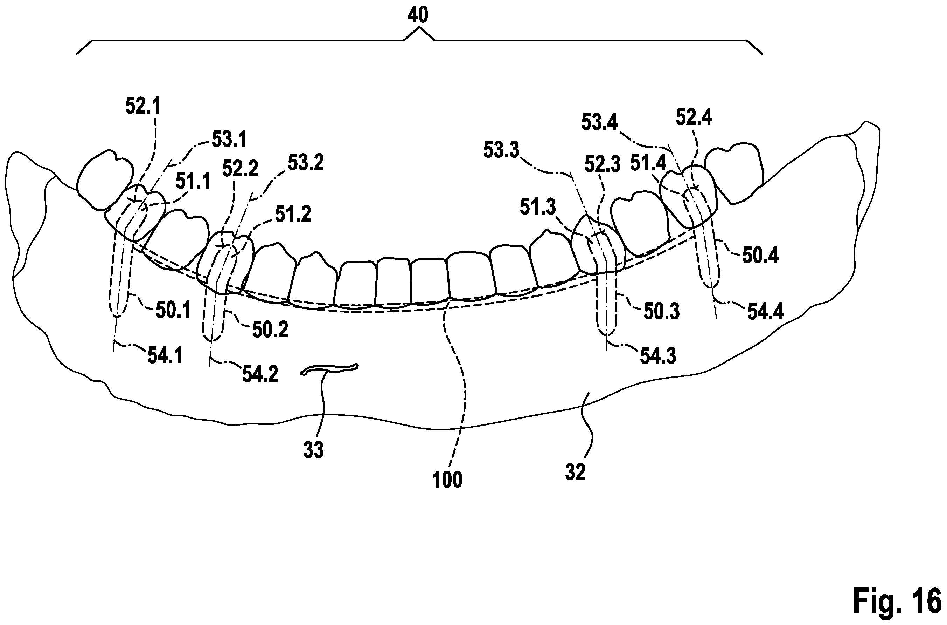

In Fig. 16 ist eine Darstellung des 3D-Röntgenmodells 20 wie in Fig. 14 des unteren Kiefers mit einem 3D-Prothesenmodells 40 für eine Prothese als Ersatz für alle Zähne des unteren Kiefers dargestellt. Die Prothese wird über Basisteile, die als 3D-Basisteilmodelle 90.1 bis 90.4 dargestellt sind, mit vier Implantaten, die als 3D-Implantatmodellen 50.1 bis 50.4 dargestellt sind, am Kiefer befestigt, wobei die Basisteile Bestandteile der Prothese 40 sind. Die 3D-Basisteilmodelle 90.1 bis 90.4 weisen Verbindungsflächen 52.1 bis 52.4 auf. Die Basisteile werden über Stege miteinander verbunden und sind in fester Lagebeziehung zueinander. Die Basisteile sind trennbar von den Implantaten gestaltet und somit kann die Prothese abgenommen werden. Die 3D-Implantatmodelle 50.1 bis 50.4 wurden aus einer Mehrzahl von 3D-Implantatmodellen mit vorgegebenen Abmessungen ausgewählt und unter Berücksichtigung der anatomischer Strukturen, vorzugsweise automatisch, positioniert. Die 3D-Basisteilmodelle 90.1 bis 90.4 werden passend zur oberen Fläche 100 des Implantats und entlang der Längsachse 54 des Implantats, vorzugsweise automatisch, positioniert.

### Bezugszeichenliste

- 1: Anzeigeeinheit
- 2: Datenverarbeitungseinheit
- 3: Speicher
- 4: Eingabemittel
- 5: Eingabemittel
- 10: 3D-Restaurationsmodell
- 11: Nachbarzahn
- 12: Nachbarzahn
- 13: Okklusalfläche
- 14: Okklusalfläche
- 15: Seitenfläche
- 16: Seitenfläche
- 17: Gingivaoberfläche
- 20: 3D-Röntgenmodell
- 21: Zahnlücke
- 30: Zahnwurzel
- 31: Zahnwurzel
- 32: Kieferknochen
- 33: Nerven
- 35: Schieberegler
- 36: rechte Endstellung
- 37: linke Endstellung
- 40: 3D-Prothesenmodell
- 41: Okklusalfläche
- 42: Seitenfläche
- 43: Seitenfläche
- 44: Grenzfläche
- 45: Kantaktflächen zu Nachbarzähnen
- 50: 3D-Implantatmodell
- 51: 3D-Verbindungsmodell
- 52: Verbindungsfläche
- 53: Verbindungsachse
- 54: Längsachse des Implantats
- 55: Schichtaufnahme
- 56: Durchmesser des 3D-Implantatmodells
- 57: Steuerungsmittel
- 58: obere Schaltfläche
- 59: untere Schaltfläche
- 60: Länge des 3D-Implantatmodells
- 61: Abstand zwischen dem 3D-Verbindungsmodell und dem Rand des 3D-Prothesenmodells
- 70: Bohrschablone
- 71: Anlagefläche
- 72: Anlagefläche
- 73: Führungsloch
- 74: Implantatbohrung
- 80: Prothesenachse
- 90: 3D-Basisteilmodell
- 100: Steg
- α: Winkel zwischen der Verbindungsachse und der Längsachse des Implantats
- β: Winkel zwischen der Prothesenachse und der Verbindungsachse

## Patentansprüche

1. Verfahren zur Herstellung eines Zahnersatzes, wobei der Zahnersatz eine Prothese zur Befestigung an einem Implantat zum Einsetzen in einen Kiefer umfasst, wobei die Befestigung über eine Verbindungsfläche (52) erfolgt und wobei
- ein korreliertes 3D-Röntgenmodell (20) bereitgestellt ist, bei dem ein Messdatensatz einer 3D-Röntgenaufnahme mit einem Messdatensatz einer dreidimensionalen optischen Vermessung bezüglich der Geometrie in Korrelation gesetzt ist,
- wobei der erste Messdatensatz der 3D-Röntgenaufnahme und der zweite Messdatensatz der dreidimensionalen optischen Vermessung der sichtbaren Oberfläche einen Bereich der einzusetzenden Prothese enthält, der den Kiefer und zumindest Teile der Nachbarzähne (11, 12) enthält,
- wobei ein Datensatz zumindest der Oberfläche der Prothese als ein 3D-Prothesenmodell (40) bereitgestellt ist,
- wobei das 3D-Prothesenmodell (40) im korrelierten 3D-Röntgenmodell (20) auf der Anzeigeeinheit (1) lagerichtig und zusammen mit diesem auf einer Anzeigeeinheit (1) dargestellt wird,
wobei ein Datensatz des Implantats in dem korrelierten 3D-Röntgenmodell (20) auf der Anzeigeeinheit (1) als ein 3D-Implantatmodell (50) angezeigt wird und, über Eingabemittel (4, 5) oder automatisch, unter Berücksichtigung des bereits lagerichtig dargestellten 3D-Prothesenmodells (40) und des 3D-Röntgenmodells (20) in dem korrelierten 3D-Röntgenmodell (20) zumindest grob positioniert wird und weiterhin vorzugsweise entweder bezüglich der Art ausgewählt wird und/oder in den Abmessungen angepasst wird, wobei das Implantat aus einer Mehrzahl von Implantaten ausgewählt wird,
wobei das Prothesenmodell (40) mittelbar über ein vorgefertigtes separates Verbindungsteil (51) mit dem 3D-Implantatmodell (50) verbunden ist, wobei das Verbindungsteil (51) eine Verbindungsfläche (52) zum Prothesenmodell (40) aufweist und mit dem 3D-Implantatmodell (50) verbunden ist, wobei das 3D-Implantatmodell (50) eine Längsachse (54) aufweist und wobei die Verbindungsfläche (52) eine Verbindungsachse (53), die die Einschubrichtung der Prothese darstellt, aufweist und wobei der Winkel α der Längsachse (54) zu der Verbindungsachse (53) aus einer Mehrzahl von vorbestimmten Winkeln α zwischen 140° und 180° automatisch ausgewählt ist.

2. Verfahren nach dem Anspruch 1,
**dadurch gekennzeichnet,**
**dass** das 3D-Implantatmodell (50) in seiner Lage und/oder seiner Orientierung und/oder seiner Art und/oder seiner Länge (60) und/oder seinem Durchmesser (56) unter Berücksichtigung des 3D-Prothesenmodells (40) automatisch bestimmt ist, nämlich unter Berücksichtigung von dessen Lage und/oder dessen Orientierung und/oder dessen Abmessungen und/oder dessen Grenzfläche (44) zu einer aus der dreidimensionalen optischen Vermessung bekannten Gingivaoberfläche (17) und/oder dessen Kontaktflächen (45) mit den Nachbarzähnen (11, 12).

3. Verfahren nach einem der Ansprüche 1 bis 2, **dadurch gekennzeichnet, dass** der Durchmesser (56) und die Länge (60) des 3D-Implantatmodells (50) unter der Berücksichtigung der zu erwartenden Belastung durch Kontaktkräfte an den Kontaktflächen (45) der Prothese automatisch ausgewählt sind.

4. Verfahren nach einem der vorherigen Ansprüche ,
**dadurch gekennzeichnet,**
**dass** das 3D-Prothesenmodell (40) eine Prothesenachse (80) aufweist und dass das 3D-Implantatmodell (50) in seiner Lage und seiner Orientierung so veränderbar ist, dass der Winkel β zwischen der Prothesenachse (80) und der Verbindungsachse (53) höchstens 30° beträgt, und die Verbindungsachse (53) so ausgerichtet ist, dass das Einbringen der Prothese entlang der Einschubachse durch die Nachbarzähne (11, 12) höchstens unwesentlich behindert wird.

5. Verfahren nach einem der vorherigen Ansprüche ,
**dadurch gekennzeichnet,**
**dass** ein Datensatz der Verbindungsfläche (52) als ein 3D-Verbindungsmodell (51) im korrelierten 3D-Röntgenmodell (20) lagerichtig angezeigt wird und dass das 3D-Prothesenmodell (40) in seiner Form automatisch an die Verbindungsfläche (52) des 3D-Verbindungsmodells (51) angepasst wird.

6. Verfahren nach einem der vorherigen Ansprüche ,
**dadurch gekennzeichnet,**
**dass** unter Berücksichtigung der ausgewählten Lage und Orientierung des 3D-Implantatmodells (50) und aufgrund der Okklusalflächen (13, 14) der Nachbarzähne (11, 12) aus dem Messdatensatz der dreidimensionalen optischen Vermessung eine Bohrschablone (70) konstruiert wird.

7. Verfahren nach einem der vorherigen Ansprüche ,
**dadurch gekennzeichnet,**
**dass** eine der Verbindungsfläche (52) des Verbindungsteils entsprechende Verbindungsvertiefung in der Prothese in Richtung der Verbindungsachse an der Unterseite der Prothese automatisch berechnet wird und im 3D-Prothesenmodell (40) angezeigt wird.

8. Verfahren nach einem der vorherigen Ansprüche,
**dadurch gekennzeichnet,**
**dass** die Lage und Orientierung des Implantats so ausgewählt oder automatisch so bestimmt wird, dass ein Verbindungsteil aus einer Mehrzahl von in einem Speicher abgelegten, eine vorgegebene Verbindungsfläche (52) zwischen Verbindungsteil und Prothese einerseits und einem vorgegebenen Winkel α zwischen der Verbindungsachse (53) und der Längsachse (54) des Implantats andererseits aufweisenden Verbindungsteile verwendbar ist.

9. Verfahren nach einem der vorherigen Ansprüche ,
**dadurch gekennzeichnet,**
**dass** das Implantat über einen Fortsatz, das die Verbindungsfläche (52) aufweist, mit der Prothese verbunden ist, wobei der Fortsatz ein Bestandteil des Implantats ist.

10. Verfahren nach dem Anspruch 9,
**dadurch gekennzeichnet,**
**dass** eine der Verbindungsfläche (52) des Fortsatzes entsprechende Verbindungsvertiefung in Richtung der Verbindungsachse an der Unterseite der Prothese automatisch berechnet wird.

11. Verfahren nach dem Anspruch 9 oder 10,
**dadurch gekennzeichnet,**
**dass** die Lage und Orientierung des Implantats so ausgewählt oder automatisch so bestimmt wird, dass ein Implantat mit einem Fortsatz aus einer Mehrzahl von in einem Speicher abgelegten, eine vorgegebene Verbindungsfläche (52) zwischen Fortsatz und Prothese einerseits und einem vorgegebenen Winkel α zwischen der Verbindungsachse (53) und der Längsachse (54) des Implantats andererseits aufweisenden Implantate mit einem Fortsatz verwendbar ist.

12. Verfahren nach einem der Ansprüche 9 bis 11,
**dadurch gekennzeichnet,**
**dass** die Prothese als Ersatz für mehrere Zähne vorgesehen ist, wobei mehrere Implantate mit einem Fortsatz in den Kiefer eingesetzt sind und über die Fortsätze (52.1 bis 52.4) mit der Prothese verbunden werden, wobei die Fortsätze (52.1 bis 52.4) der einzelnen Implantate unabhängig voneinander entlang der jeweiligen Verbindungsachsen (53.1 bis 53.4) ausgerichtet sind und eine feste Lagebeziehung zueinander aufweisen.

13. Verfahren nach einem der Ansprüche 1 bis 6,
**dadurch gekennzeichnet,**
**dass** die Prothese über ein Basisstück (90) unmittelbar mit dem Implantat (50) verbunden ist, wobei das Basisstück (90) Bestandteil der Prothese (40) ist und die Kontaktfläche zwischen dem Basisstück (90) und dem Implantat (50) der Verbindungsfläche (52) entspricht.

14. Verfahren nach dem Anspruch 13,
**dadurch gekennzeichnet,**
**dass** die Lage des Basisstücks (90) mit einer Orientierung in Richtung der Verbindungsachse (53) automatisch berechnet wird.

15. Verfahren nach Anspruch 13oder 14,
**dadurch gekennzeichnet,**
**dass** die Prothese (40) als Ersatz für mehrere Zähne vorgesehen ist, wobei mehrere Basisstücke (90.1 bis 90.4) die Prothese mit den Implantaten (50.1 bis 50.4) entlang der jeweiligen voneinander unabhängigen Verbindungsachsen (53.1 bis 53.4) verbinden und eine feste Lagebeziehung zueinander aufweisen.

## Claims

1. Method for producing a dental prosthesis, wherein the dental prosthesis comprises a prosthesis for attachment to an implant for insertion in a jaw, wherein the attachment is realised via a connection surface (52), and wherein
- a correlated 3D X-ray model (20) is provided, in which a measurement dataset of a 3D X-ray image is correlated with a measurement dataset of a three-dimensional optical measurement in respect of geometry,
- wherein the first measurement dataset of the 3D X-ray image and the second measurement dataset of the three-dimensional optical measurement of the visible surface comprises a region of the prosthesis that is to be inserted, which includes the jaw and at least parts of the neighbouring teeth (11, 12),
- wherein a dataset of at least the surface of the prosthesis is provided as a 3D prosthesis model (40)
- wherein the 3D prosthesis model (40) is represented on the display unit (1) in the correct position in the correlated 3D X-ray model (20) and is represented together with it on a display unit (1), wherein a dataset of the implant is displayed on the display unit (1) as a 3D implant model (50) in the correlated 3D X-ray model (20) and is positioned at least approximately in the 3D X-ray model (20) by input means (4, 5) or automatically, taking into account the 3D prosthesis model (40) which is already represented in the correct position, and the 3D X-ray model (20), and is further selected preferably either on the basis of type and/or is adjusted in terms of dimensions,
wherein the implant is selected from a plurality of implants,
wherein the prosthesis model (40) is connected to the 3D implant model (50) indirectly via a prefabricated separate connecting element (51), wherein the connecting element (51) has a connection surface (52) with the prosthesis model (40) and is connected to the 3D implant model (50), wherein the 3D implant model (50) has a longitudinal axis (54) and wherein the connection surface (52) has a connection axis (53) which represents the direction of insertion of the prosthesis, and wherein the angle α between the longitudinal axis (54) and the connection axis (53) is selected automatically from a plurality of predefined angles α between 140° and 180°.

2. Method according to Claim 1,
**characterized in that**
the 3D implant model (50) is calculated automatically in terms of its position and/or orientation and/or type and/or length (60) and/or diameter (56) taking into account the 3D prosthesis model (40), specifically taking account of its location and/or orientation and/or dimensions and/or its boundary surface (44) with a gingival surface (17) known from the three-dimensional optical measurement and/or the contact surfaces (45) thereof with the neighbouring teeth (11, 12) .

3. Method according to either of Claims 1 or 2,
**characterized in that**
the diameter (56) and length (60) of the 3D implant model (50) are selected automatically taking into account the expected load by contact forces on the contact surfaces (45) of the prosthesis.

4. Method according to any one of the preceding claims,
**characterized in that**
the 3D prosthesis model (40) has a prosthesis axis (80) and that the 3D implant model (50) is changeable in respect of its position and orientation in such manner that the angle β between the prosthesis axis (80) and the connection axis (53) is not more than 30°, and the connecting axis (53) is aligned such that the introduction of the prosthesis along the insertion axis is obstructed at most only insignificantly by the neighbouring teeth (11, 12).

5. Method according to any one of the preceding claims,
**characterized in that**
a dataset of the connection surface (52) is displayed in the correlated 3D X-ray model (20) correctly positioned as a 3D connection model (51), and that the shape of the 3D prosthesis model (40) is adjusted automatically to match the connection surface (52) of the 3D connection model (51).

6. Method according to any one of the preceding claims,
**characterized in that**
a drilling template (70) is constructed from the measurement dataset of the three-dimensional optical measurement taking into account the selected position and orientation of the 3D implant model (50) and on the basis of the occlusal surfaces (13, 14) of the neighbouring teeth (11, 12).

7. Method according to any one of the preceding claims,
**characterized in that**
a connection recess in the prosthesis corresponding to the connection surface (52) of the connecting element is calculated automatically in the direction of the connection axis on the underside of the prosthesis and displayed in the 3D prosthesis model (40).

8. Method according to any one of the preceding claims,
**characterized in that**
the position and orientation of the implant is selected or automatically determined in such manner that a connecting element can be used from a plurality of connecting elements stored in a memory, which on the one hand have a predefined connection surface (52) between the connecting element and the prosthesis and on the other hand have a predetermined angle α between the connection axis (53) and the longitudinal axis (54) of the implant.

9. Method according to any one of the preceding claims,
**characterized in that**
the implant is connected to the prosthesis via an extension of the connection surface (52), wherein the extension is a component of the implant.

10. Method according to Claim 9,
**characterized in that**
a connection recess corresponding to the connection surface (52) of the extension is calculated automatically in the direction of the connection axis on the underside of the prosthesis.

11. Method according to Claim 9 or 10,
**characterized in that**
the position and orientation of the implant is selected or automatically determined in such manner that an implant having an extension can be used from a plurality of implants having an extension which are stored in a memory, which on the one hand have a predefined connection surface (52) between the extension and the prosthesis and on the other hand have a predetermined angle α between the connection axis (53) and the longitudinal axis (54) of the implant.

12. Method according to any one of Claims 9 to 11,
**characterized in that**
the prosthesis is provided as a replacement for multiple teeth, wherein multiple implants with extension are inserted in the jaw and are connected to the prosthesis via the extensions (52.1 to 52.4), wherein the extensions (52.1 to 52.4) of the individual implants are aligned along the respective connection axes (53.1 to 53.4) independently of each other and have a fixed positional relationship to each other.

13. Method according to any one of Claims 1 to 6,
**characterized in that**
the prosthesis is connected directly to the implant (50), via a base piece (90), wherein said base piece (90) is a part of the prosthesis (40) and the contact surface between the base piece (90) and the implant (50) corresponds to the connection surface (52).

14. Method according to Claim 13,
**characterized in that**
the position of the base piece (90) is calculated automatically with an orientation in the direction of the connection axis (53).

15. Method according to Claim 13 or 14,
**characterized in that**
the prosthesis (40) is provided as a replacement for multiple teeth, wherein multiple base pieces (90.1 to 90.4), connect the prosthesis to the implants (50.1 to 50.4) along the respective, mutually independent connection axes (53.1 to 53.4) and have a fixed positional relationship to each other.

## Revendications

1. Procédé, destiné à fabriquer une dent artificielle, la dent artificielle comprenant une prothèse destinée à être fixée sur un implant à insérer dans une mâchoire, la fixation s'effectuant par l'intermédiaire d'une surface d'assemblage (52) et
- un modèle radiologique en 3D (20) corrélé étant mis à disposition, pour lequel un ensemble de données de mesure d'un cliché radiologique en 3D est mis en corrélation avec un ensemble de données de mesure d'une mensuration optique tridimensionnelle concernant la géométrie,
- le premier ensemble de données de mesure du cliché radiologique en 3D et le deuxième ensemble de données de mesure de la mensuration optique tridimensionnelle de la surface visible contenant une zone de la prothèse à insérer qui contient la mâchoire et au moins des parties des dents voisines (11, 12),
- un ensemble de données d'au moins la surface de la prothèse étant mis à disposition sous la forme d'un modèle de prothèse en 3D (40),
- le modèle de prothèse en 3D (40) étant représenté dans le modèle radiologique en 3D (20) corrélé en position exacte sur l'unité d'affichage (1) et conjointement avec celui-ci sur une unité d'affichage (1),
un ensemble de données de l'implant s'affichant dans le modèle radiologique en 3D (20) corrélé sur l'unité d'affichage (1) sous la forme d'un modèle d'implant en 3D (50) et, par l'intermédiaire d'un moyen de saisie (4, 5) ou automatiquement, sous considération du modèle de prothèse en 3D (40) déjà représenté en position exacte et du modèle radiologique en 3D (20), étant positionné au moins grossièrement dans le modèle radiologique en 3D (20) corrélé et de préférence par ailleurs, étant sélectionné soit en fonction de la nature et/ou adapté au niveau des dimensions, l'implant étant sélectionné parmi une pluralité d'implants,
le modèle de prothèse (40) étant assemblé indirectement par l'intermédiaire d'une pièce d'assemblage (51) préfabriquée séparée avec le modèle d'implant en 3D (50),
la pièce d'assemblage (51) comportant une surface d'assemblage (52) pour obtenir le modèle de prothèse (40) et étant assemblée avec le modèle d'implant en 3D (50), le modèle d'implant en 3D (50) comportant un axe longitudinal (54) et la surface d'assemblage (52) comportant un axe d'assemblage (53) qui représente la direction d'insertion de la prothèse et l'angle α de l'axe longitudinal (54) par rapport à l'axe d'assemblage (53) étant choisi automatiquement parmi une pluralité d'angles α prédéfinis entre 140° et 180°.

2. Procédé selon la revendication 1, **caractérisé en ce que** le modèle d'implant en 3D (50) est déterminé automatiquement au niveau de sa position et/ou de son orientation et/ou de sa nature et/ou de sa longueur (60) et/ou de son diamètre (56), sous considération du modèle de prothèse en 3D (40), à savoir sous considération de sa position et/ou de son orientation et/ou de ses dimensions et/ou de sa surface limite (44) vers une surface gingivale (17) connue par la mensuration optique tridimensionnelle et/ou de ses surfaces de contact (45) avec les dents voisines (11, 12).

3. Procédé selon l'une quelconque des revendications 1 à 2, **caractérisé en ce que** le diamètre (56) et la longueur (60) du modèle d'implant en 3D (50) sont sélectionnés automatiquement sous la considération de la contrainte attendue par des forces de contact sur les surfaces de contact (45) de la prothèse.

4. Procédé selon l'une quelconque des revendications précédentes, **caractérisé en ce que** le modèle de prothèse en 3D (40) comporte un axe de prothèse (80) et **en ce que** le modèle d'implant en 3D (50) est variable dans sa position et dans son orientation, de telle sorte que l'angle β entre l'axe de prothèse (80) et l'axe d'assemblage (53) soit d'un maximum de 30 °, et que l'axe d'assemblage (53) soit orienté de manière à ce que l'introduction de la prothèse le long de l'axe d'insertion soit entravée au plus de manière négligeable par les dents voisines (11, 12).

5. Procédé selon l'une quelconque des revendications précédentes, **caractérisé en ce qu'**un ensemble de données de la surface d'assemblage (52) s'affiche en position exacte sous la forme d'un modèle d'assemblage en 3D (51) dans le modèle radiologique en 3D (20) corrélé et **en ce que** le modèle de prothèse en 3D (40) est adapté automatiquement par sa forme à la surface d'assemblage (52) du modèle d'assemblage en 3D (51).

6. Procédé selon l'une quelconque des revendications précédentes, **caractérisé en ce que** sous considération de la position et de l'orientation sélectionnées du modèle d'implant en 3D (50) et sur la base des surfaces occlusales (13, 14) des dents voisines (11, 12) un gabarit de perçage (70) est construit à partir de l'ensemble de données de mesure de la mensuration optique tridimensionnelle.

7. Procédé selon l'une quelconque des revendications précédentes, **caractérisé en ce qu'**un creux d'assemblage dans la prothèse en direction de l'axe d'assemblage sur la face inférieure de la prothèse correspondant à la surface d'assemblage (52) de la pièce d'assemblage est automatiquement calculé et s'affiche dans le modèle de prothèse en 3D (40).

8. Procédé selon l'une quelconque des revendications précédentes, **caractérisé en ce que** la position et l'orientation de l'implant sont sélectionnées ou déterminées automatiquement de telle sorte qu'une pièce d'assemblage soit utilisable parmi une pluralité de pièces d'assemblage sauvegardées dans une mémoire, comportant une surface d'assemblage (52) prédéfinie entre la pièce d'assemblage et la prothèse d'une part et un angle α prédéfini entre l'axe d'assemblage (53) et l'axe longitudinal (54) de l'implant d'autre part.

9. Procédé selon l'une quelconque des revendications précédentes, **caractérisé en ce que** l'implant est assemblé avec la prothèse par l'intermédiaire d'un prolongement qui comporte la surface d'assemblage (52), le prolongement étant un constituant de l'implant.

10. Procédé selon la revendication 9, **caractérisé en ce qu'**un creux d'assemblage correspondant à la surface d'assemblage (52) du prolongement dans la direction de l'axe d'assemblage sur la face inférieure de la prothèse est automatiquement calculé.

11. Procédé selon la revendication 9 ou 10, **caractérisé en ce que** la position et l'orientation de l'implant sont sélectionnées ou déterminées automatiquement de telle sorte qu'un implant pourvu d'un prolongement soit utilisable parmi une pluralité d'implants pourvus d'un prolongement sauvegardés dans une mémoire, comportant une surface d'assemblage (52) prédéfinie entre le prolongement et la prothèse d'une part et un angle α prédéfini entre l'axe d'assemblage (53) et l'axe longitudinal (54) de l'implant d'autre part.

12. Procédé selon l'une quelconque des revendications 9 à 11, **caractérisé en ce que** la prothèse est prévue en remplacement de plusieurs dents, plusieurs implants pourvus d'un prolongement étant insérés dans la mâchoire et assemblés avec la prothèse par l'intermédiaire des prolongements (52.1 à 52.4), les prolongements (52.1 à 52.4) des implants individuels étant orientés indépendamment les uns des autres le long de l'axe d'assemblage (53.1 à 53.4) respectif et présentant une relation de position fixe les uns par rapport aux autres..

13. Procédé selon l'une quelconque des revendications 1 à 6, **caractérisé en ce que** la prothèse est assemblée par l'intermédiaire d'une pièce de base (90) directement avec l'implant (50), la pièce de base (90) étant un constituant de la prothèse (40) et la surface de contact entre la pièce de base (90) et l'implant (50) correspondant à la surface d'assemblage (52).

14. Procédé selon la revendication 13, **caractérisé en ce que** la position de la pièce de base (90) avec une orientation dans la direction de l'axe d'assemblage (53) est automatiquement calculée.

15. Procédé selon la revendication 13 ou 14, **caractérisé en ce que** la prothèse (40) est prévue en remplacement de plusieurs dents, plusieurs pièces de base (90.1 à 90.4) assemblant la prothèse avec les implants (50.1 à 50.4) le long des axes d'assemblage (53.1 à 53.4) respectivement indépendants les uns des autres et présentant une relation de position fixe les unes par rapport aux autres.
